# EUROPEAN PATENT APPLICATION

(11) **EP 4 803 066 A1**
(43) Date of publication of application: **09.09.2026**
(21) Application number: 24897557.5
(22) Date of filing: 26.11.2024
(51) Int. Cl.: A61J 1/20, G01N 1/00

(54) **COLLECTION KIT**

(30) Priority: 28.11.2023 JP 2023200679
(71) Applicant: Terumo Kabushiki Kaisha, Tokyo 151-0072 (JP)
(72) Inventor: KAWAGUCHI, Satoshi, Fujinomiya-shi, Shizuoka 418-0004 (JP)
(74) Representative: TBK
(86) International application number: PCT/JP2024/041863
(87) International publication number: WO 2025/115873

(57) **Abstract**

A collection kit (10) includes an inlet tube (16) to which a medical bag (12) is connected, and a first storage portion (201) and a second storage portion (202) that store a collection target (M). The collection kit (10) further includes a flow path switching portion (18) disposed between the first storage portion (201) and the second storage portion (202) and the inlet tube (16). The flow path switching portion (18) allows the inlet tube (16) to selectively communicate with one of the first storage portion (201) and the second storage portion (202).

## Description

### Technical Field

The present invention relates to a collection kit for transferring a collection target (mainly a liquid pharmaceutical) contained in a medical bag to a plurality of sampling containers.

### Background Art

Blood products include red blood cell products, plasma products, platelet products, and whole blood products. To ensure safety, a small sample of a blood product may be collected for a culture test. In the culture test, the sample is collected in a culture bottle (i.e., a sampling container), and the culture bottle is placed in an environment suitable for bacterial growth so as to detect the presence or absence of pathogens.

Hereinafter, with reference to a medical bag containing a platelet product (hereinafter referred to as a "platelet bag") as an example, an operation procedure for transferring a platelet product from the platelet bag to two culture bottles will be described.

A small-volume collection bag is connected to the platelet bag so that a part of the platelet product in the platelet bag is transferred to the collection bag. Then, the collection bag is disconnected from the platelet bag. Next, in a clean bench, the collection bag is connected to a tube extending from a sample collection tube, and a prescribed amount of the platelet product is transferred from the collection bag to the sample collection tube with reference to the scale of the sample collection tube. After that, two culture bottles are sequentially connected to the sample collection tube, and a prescribed amount of the platelet product is transferred to each of the two culture bottles. One of the two culture bottles is a culture bottle subjected to anaerobic culture, and the other is a culture bottle subjected to aerobic culture.

For example, US Patent No. 8777921 discloses a collection kit for collecting a sample from a medical bag.

### Citation List

### Patent Literature

Patent Literature 1: US Patent No. 8777921

### Summary of Invention

From the perspective of further improving the safety of blood products, performing culture tests of all blood products has been considered. Therefore, it is required to improve the work efficiency of culture tests of blood products. In addition, it is desirable that a predetermined amount of a collection target can be collected in each of a plurality of sampling containers.

An object of the present invention is to solve the above-described problems.

(1) An aspect of the present invention is a collection kit for collecting a collection target contained in a medical bag into a plurality of sampling containers, the collection kit including an inlet tube connecting to the medical bag; a plurality of storage portions connected downstream of the inlet tube, the plurality of storage portions being adapted to store the collection target; a plurality of adapters each connected to one of the plurality of storage portions, and having the sampling containers attached to the respective adapters; a flow path switching portion disposed between the inlet tube and the plurality of storage portions, the flow path switching portion being adapted to allow the inlet tube to selectively communicate with one of the plurality of storage portions; and an exhaust portion for exhausting air in the plurality of storage portions.

According to the collection kit, by providing the flow path switching portion for storing the collection target in the plurality of storage portions, it is possible to increase the work efficiency at the time of collecting the collection target into the plurality of sampling containers, and collect a predetermined amount of the collection target.

(2) In the collection kit according to (1) above, each of the plurality of storage portions may include a relay tube that receives the collection target having passed through the inlet tube, and a storage body having a storage chamber that is connected downstream of the relay tube, is capable of temporarily storing the collection target, and has a volume larger than a volume of the relay tube.

With such a configuration, it is easy to store a predetermined amount of the collection target in the storage chamber of each storage portion.

(3) In the collection kit according to (1) or (2) above, the flow path switching portion may be a stopcock including a flow path communicating with the inlet tube, and a switching member operable to allow one of the plurality of storage portions to communicate with the inlet tube via the flow path.

With such a configuration, communication between one of the plurality of storage portions and the inlet tube can be effectively switched by operating the switching member of the stopcock.

(4) In the collection kit according to (2) above, the flow path switching portion may include a plurality of closing members each provided on one of a plurality of the relay tubes to block communication between one of the plurality of storage portions and the inlet tube.

With such a configuration, the structure of the flow path switching portion can be made simple, and a cost reduction can be achieved.

(5) In the collection kit according to any one of (1) to (4) above, the exhaust portion may be provided in each of the plurality of storage portions. As a result, when the collection target is stored in each of the plurality of storage portions, air in each storage portion can be effectively discharged to the atmosphere.

According to the present invention, the collection kit includes the flow path switching portion disposed between the inlet tube to which the medical bag is connected and the plurality of storage portions, and the flow path switching portion can allow the inlet tube to selectively communicate with one of the plurality of storage portions. As a result, by providing the flow path switching portion for storing the collection target in the plurality of storage portions, it is possible to increase the work efficiency at the time of collecting the collection target into the plurality of sampling containers attached to the respective adapters, and collect a predetermined amount of the collection target.

### Brief Description of Drawings

[Fig. 1] Fig. 1 is a schematic configuration diagram of a collection kit according to an embodiment of the present invention.
[Fig. 2] Fig. 2A is an enlarged explanatory view of a flow path switching portion illustrating a first position of a switching member. Fig. 2B is an enlarged explanatory view of the flow path switching portion illustrating a second position of the switching member.
[Fig. 3] Fig. 3 is an explanatory view illustrating a case where a collection target is stored in a first storage portion of the collection kit.
[Fig. 4] Fig. 4 is an explanatory view illustrating a case where a collection target is stored in a second storage portion of the collection kit.
[Fig. 5] Fig. 5 is an explanatory view illustrating a case where a collection target is transferred from the first storage portion to a first sampling container.
[Fig. 6] Fig. 6 is an explanatory view illustrating a case where a collection target is transferred from the second storage portion to a second sampling container.
[Fig. 7] Fig. 7 is a schematic configuration diagram of a collection kit according to a first modification.
[Fig. 8] Fig. 8 is a schematic configuration diagram of a collection kit according to a second modification.

### Description of Embodiments

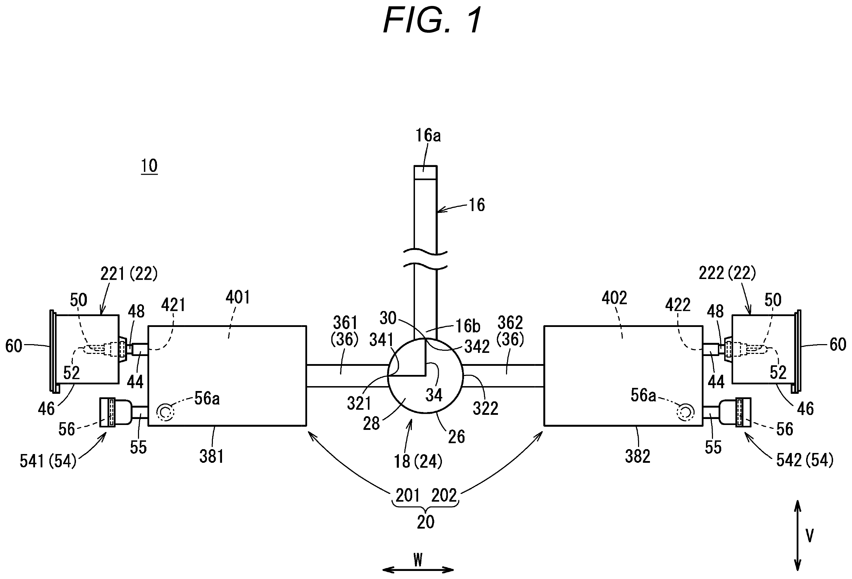

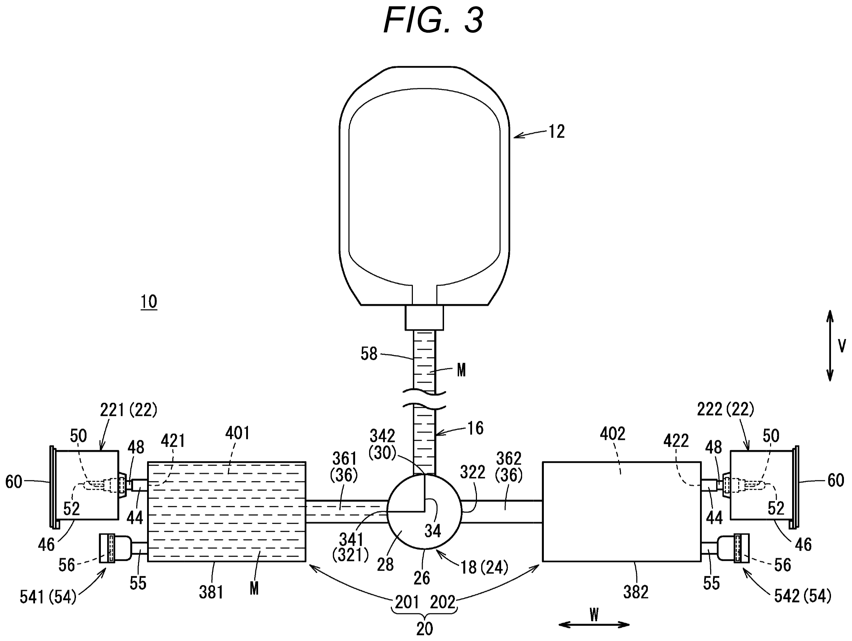

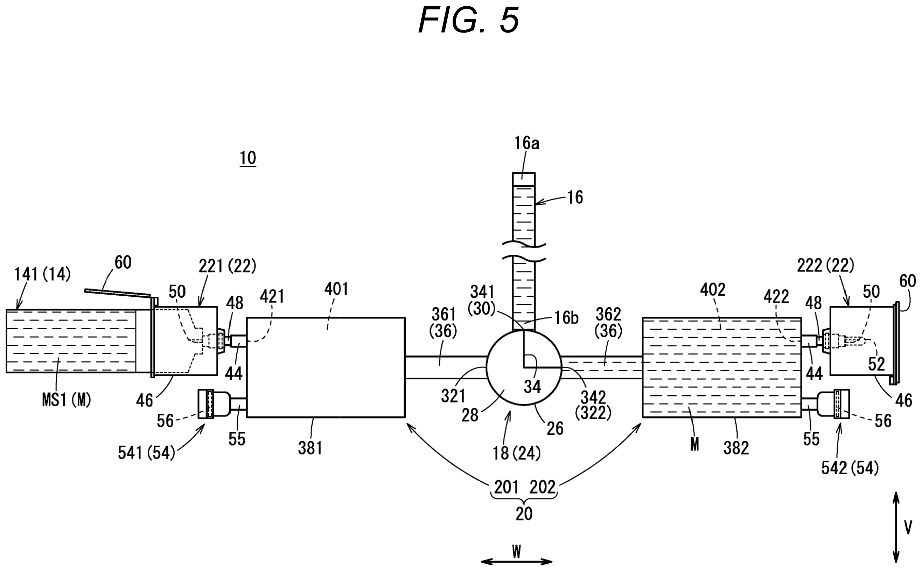

As illustrated in Fig. 1, a collection kit 10 according to the present embodiment is used to transfer a collection target M contained in a medical bag 12 illustrated in Fig. 3 to a plurality of sampling containers 14 (see Fig. 5). The collection target M is, for example, a blood product such as a platelet product. The collection target M may be a pharmaceutical other than blood products. The collection target M may be a liquid sample other than pharmaceuticals. The medical bag 12 may be a blood bag system for centrifugally separating blood containing a plurality of components into a plurality of components of different specific gravities (e.g., three components including a component of a low specific gravity, a component of a medium specific gravity, and a component of a high specific gravity; or two components including a component of a low specific gravity and a component of a high specific gravity), and separately storing the respective components in different bags. In such a case, the collection kit 10 may be connected to the blood bag system.

As illustrated in Fig. 1, the collection kit 10 includes an inlet tube 16 to which the medical bag 12 (see Fig. 3) is connected, a flow path switching portion 18, a plurality of storage portions 20, and a plurality of adapters 22. Hereinafter, a direction in which the inlet tube 16 of the collection kit 10 illustrated in Fig. 1 extends (i.e., the direction of an arrow V) shall be referred to as the vertical direction. A direction perpendicular to the vertical direction shall be referred to as the width direction of the collection kit 10 (i.e., the direction of an arrow W).

The inlet tube 16 is a transparent or translucent medical tube. The inlet tube 16 is formed of, for example, a thermoplastic resin such as a vinyl chloride resin. The inlet tube 16 can be connected to or separated from another medical tube without its interior being exposed to the outside air by using an aseptic joining device, a tube sealer, or the like.

The inlet tube 16 has an upstream end 16a and a downstream end 16b. In the initial state where the collection kit 10 is provided as a product, the upstream end 16a is sealed by welding. The downstream end 16b is connected to the flow path switching portion 18.

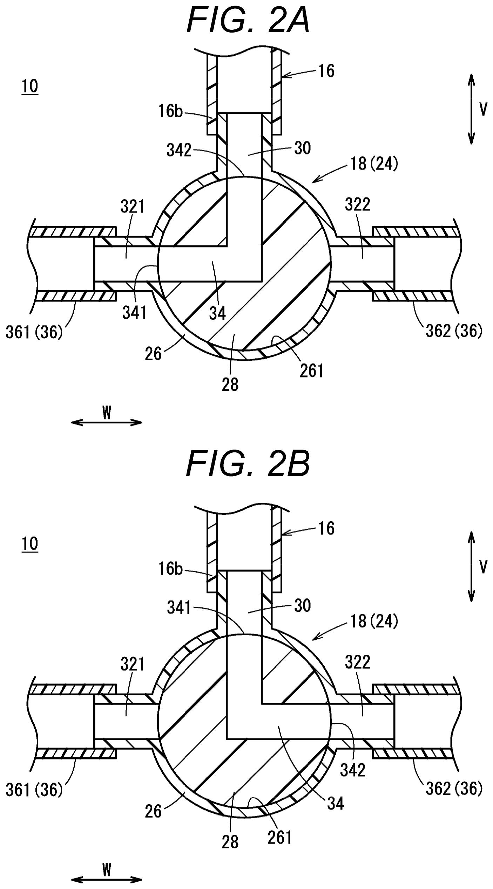

The flow path switching portion 18 is disposed between the inlet tube 16 and the plurality of storage portions 20. The flow path switching portion 18 allows the inlet tube 16 to selectively communicate with one of the plurality of storage portions 20. As illustrated in Fig. 2A, the flow path switching portion 18 is a stopcock 24. The stopcock 24 includes a housing 26 and a switching member 28 accommodated in the housing 26. In a plan view of the stopcock 24 illustrated in Fig. 2A, the housing 26 is formed in a hollow circular shape. The housing 26 has an accommodation space 261 for accommodating the switching member 28 therein.

The housing 26 has an introduction port 30, a first port 321, and a second port 322. That is, the housing 26 is a three-way stopcock having three ports. Each of the introduction port 30, the first port 321, and the second port 322 protrudes radially outward from the outer peripheral face of the housing 26. Each of the introduction port 30, the first port 321, and the second port 322 communicates with the accommodation space 261 of the housing 26.

The downstream end 16b of the inlet tube 16 is connected to the introduction port 30. The introduction port 30 is a port into which the collection target M from the medical bag 12 flows. The first port 321 is disposed apart from the introduction port 30 in the circumferential direction of the housing 26. The first port 321 is a port through which the collection target M coming from the introduction port 30 is transferred toward a sampling container 14. The second port 322 is disposed apart from each of the introduction port 30 and the first port 321 in the circumferential direction of the housing 26. The second port 322 is a port through which the collection target M coming from the introduction port 30 is transferred toward a sampling container 14.

The switching member 28 is formed in a circular shape, and is rotatably accommodated in the accommodation space 261 of the housing 26. The switching member 28 has a flow path 34 communicating with the inlet tube 16. In a plan view of the switching member 28, the flow path 34 is formed in a substantially L shape. The flow path 34 has a first opening 341 and a second opening 342. The first opening 341 is provided at one end of the flow path 34. The second opening 342 is provided at the other end of the flow path 34. The first opening 341 and the second opening 342 are open at the outer peripheral face of the switching member 28. The first opening 341 and the second opening 342 are located apart from each other in the circumferential direction of the switching member 28.

The switching member 28 operates to allow one of a plurality of ports: the first port 321 and the second port 322 to communicate with the introduction port 30 via the flow path 34. Through the rotation of the switching member 28, one of the first port 321 and the second port 322 selectively communicates with the introduction port 30 via the flow path 34. As illustrated in Fig. 2A, at a first position of the switching member 28, the stopcock 24 allows the introduction port 30 and the first port 321 to communicate with each other via the flow path 34. At the first position, the first opening 341 faces the first port 321, and the second opening 342 faces the introduction port 30. At the first position, the switching member 28 closes the second port 322 to block communication between the introduction port 30 and the second port 322.

At a second position of the switching member 28 illustrated in Fig. 2B, the introduction port 30 and the second port 322 communicate with each other via the flow path 34. At the second position, the first opening 341 faces the introduction port 30, and the second opening 342 faces the second port 322. At the second position, the switching member 28 closes the first port 321 to block communication between the introduction port 30 and the first port 321.

As illustrated in Fig. 1, the plurality of storage portions 20 are connected downstream of the inlet tube 16 to store the collection target M. The plurality of storage portions 20 include a first storage portion 201 and a second storage portion 202. The first storage portion 201 includes a first relay tube 361 connected to the flow path switching portion 18, and a first storage body 381 connected downstream of the first relay tube 361. Note that the number of the plurality of storage portions 20 is not limited to two. The plurality of storage portions 20 may include three or more storage portions 20.

The first relay tube 361 is a transparent or translucent medical tube. The first relay tube 361 is formed of, for example, a thermoplastic resin such as a vinyl chloride resin. An upstream end of the first relay tube 361 is connected to the first port 321 of the stopcock 24. The first storage body 381 is a cylindrical body having a first storage chamber 401 therein. The first storage body 381 is formed of, for example, a hard material (i.e., a plastic material) such as polypropylene, polyethylene, or polycarbonate. The volume of the first storage chamber 401 is, for example, about 8 mL to about 10 mL. The first storage chamber 401 temporarily stores the collection target M to be collected into a first sampling container 141 that is one of the plurality of sampling containers 14. A downstream end of the first relay tube 361 is connected to one end of the first storage portion 201. The first relay tube 361 and the first storage chamber 401 communicate with each other. A first outlet port 421 for discharging the collection target M stored in the first storage chamber 401 is provided at the other end of the first storage portion 201. The first outlet port 421 is provided downstream of the first storage portion 201. The first outlet port 421 is not directly connected to the flow path switching portion 18.

The volume of the first storage chamber 401 is larger than the volume of the first relay tube 361. The volume of the first relay tube 361 is determined by multiplying the length of the first relay tube 361 along the direction in which the first relay tube 361 extends and its inner diameter.

The second relay tube 362 is a transparent or translucent medical tube. The second relay tube 362 is formed of, for example, a thermoplastic resin such as a vinyl chloride resin. An upstream end of the second relay tube 362 is connected to the second port 322 of the stopcock 24. The second storage body 382 is a cylindrical body having a second storage chamber 402 therein. The second storage body 382 is formed of, for example, a hard material (i.e., a plastic material) such as polypropylene, polyethylene, or polycarbonate. The volume of the second storage chamber 402 is, for example, about 8 mL to about 10 mL. The second storage chamber 402 temporarily stores the collection target M to be collected into a second sampling container 142 that is one of the plurality of sampling containers 14. A downstream end of the second relay tube 362 is connected to one end of the second storage portion 202. The second relay tube 362 and the second storage chamber 402 communicate with each other. A second outlet port 422 for discharging the collection target M stored in the second storage chamber 402 is provided at the other end of the second storage portion 202. The second outlet port 422 is provided downstream of the second storage portion 202. The second outlet port 422 is not directly connected to the flow path switching portion 18.

The volume of the second storage chamber 402 is larger than the volume of the second relay tube 362. The volume of the second relay tube 362 is determined by multiplying the length of the second relay tube 362 along the direction in which the second relay tube 362 extends and its inner diameter.

Each of the first storage body 381 and the second storage body 382 is not limited to a storage body formed of a cylindrical body. For example, it may be a storage body that has a collection bag made of two flexible sheets overlaid in the thickness direction and welded together, and is disposed between two flexible sheets. In such a case, the collection bag is formed of a soft material.

Connection members 44 are respectively connected to the first outlet port 421 and the second outlet port 422. The respective connection members 44 protrude outward beyond the first storage body 381 and the second storage body 382. Each connection member 44 has a breakable plug (not illustrated) therein. In the initial state, the first outlet port 421 and the second outlet port 422 are sealed with their respective plugs.

The plurality of sampling containers 14 are attached to the respective adapters 22. The plurality of adapters 22 include a first adapter 221 and a second adapter 222. The first adapter 221 is connected to the other end of the first storage body 381 via the connection member 44. The first adapter 221 protrudes beyond the other end of the first storage body 381. The second adapter 222 is connected to the other end of the second storage body 382 via the connection member 44. The second adapter 222 protrudes beyond the other end of the second storage body 382. Each of the first adapter 221 and the second adapter 222 includes an adapter body 46, and a communication tube portion 48 provided at an upper end of the adapter body 46. As the communication tube portion 48 is inserted through an inner hole of the connection member 44, the first adapter 221 or the second adapter 222 is connected to the first storage chamber 401 or the second storage chamber 402.

Each of the first adapter 221 and the second adapter 222 includes a needle tube 50 and a rubber cover 52 covering the needle tube 50. The needle tube 50 is provided in the adapter body 46, and is continuous with the communication tube portion 48. When a neck portion of the sampling container 14 is inserted into the adapter body 46, the needle tube 50 penetrates a plug body (not illustrated) of the sampling container 14 (see Fig. 5). As the connection member 44 is opened, the sampling container 14 communicates with the first storage chamber 401 or the second storage chamber 402 via the communication tube portion 48 and the needle tube 50.

When the needle tube 50 punctures the plug body of the sampling container 14, the rubber cover 52 is compressed by being pushed toward the first storage portion 201 or the second storage portion 202. The needle tube 50 penetrates the compressed rubber cover 52. When the needle tube 50 comes out of the plug body of the first sampling container 141, the rubber cover 52 stretches due to the elastic restoring force to cover the needle tube 50 again.

The collection kit 10 further includes a plurality of exhaust portions 54. The plurality of exhaust portions 54 include a first exhaust portion 541 provided in the first storage portion 201, and a second exhaust portion 542 provided in the second storage portion 202. Note that the number of the exhaust portions 54 and the number of the storage portions 20 are equal. The first exhaust portion 541 is provided to exhaust air inside the first storage chamber 401. The first exhaust portion 541 is connected to the other end of the first storage portion 201 via an attachment member 55, and communicates with the first storage chamber 401. The second exhaust portion 542 is provided to exhaust air inside the second storage chamber 402. The second exhaust portion 542 is connected to the other end of the second storage portion 202 via an attachment member 55, and communicates with the second storage chamber 402.

Each of the first exhaust portion 541 and the second exhaust portion 542 includes a filter 56 that allows the passage of gas and blocks the passage of liquid. When the collection target M is composed primarily of water, the filter 56 is preferably a hydrophilic filter. In such a case, when the collection target M moves through the first storage chamber 401 or the second storage chamber 402 and the collection target M then comes into contact with the filter 56, pores of the filter 56 are closed by the liquid. After the pores of the filter 56 are closed, the filter 56 blocks the passage of gas and liquid. This can prevent the leakage of the collection target M from the first storage chamber 401 and the second storage chamber 402 to the outside. Examples of the collection target M that is composed primarily of water include blood products.

Note that the exhaust portion 54 need not be connected to the other end of the first storage portion 201 or the second storage portion 202 via the attachment member 55. The exhaust portion 54 may be provided in a face of the first storage portion 201 or the second storage portion 202 other than the other end. For example, a filter 56a of the exhaust portion 54 may be provided on each of the outer peripheral faces of the first storage body 381 and the second storage body 382 (see a two-dot chain line shape in Fig. 1). In such a case, the filter 56a is disposed at each of positions facing the first storage chamber 401 and the second storage chamber 402 so that air in each of the first storage chamber 401 and the second storage chamber 402 can be directly discharged to the atmosphere through the filter 56a.

Next, a collection method of separating the collection target M into the first sampling container 141 and the second sampling container 142 using the collection kit 10 will be described.

First, as illustrated in Fig. 3, a step of connecting the medical bag 12 to the inlet tube 16 is performed. A worker connects the medical bag 12 containing the collection target M, such as a platelet product, to the inlet tube 16. At this time, the medical bag 12 is disposed above the collection kit 10. The worker joins a supply tube 58 of the medical bag 12 to the inlet tube 16.

Next, a step of transferring the collection target M to the first storage portion 201 (i.e., the first storage chamber 401) is performed. Before transferring the collection target M to the first storage portion 201, the worker rotates the stopcock 24 to set the switching member at the first position where the first opening 341 of the flow path 34 faces the first port 321 and the second opening 342 faces the inlet tube 16. As illustrated in Fig. 2A, at the first position, the inlet tube 16 and the first storage portion 201 communicate with each other via the flow path 34. In such a case, the inlet tube 16 and the second storage portion 202 (i.e., the second port 322) are in a non-communicating state. In addition, the worker performs the work in a state where the first exhaust portion 541 is disposed above the first storage portion 201.

The collection target M is, for example, a liquid and is flowable. Therefore, the collection target M flows out of the medical bag 12 by gravity, and moves from the introduction port 30 to the first relay tube 361 through the flow path 34 of the stopcock 24 and the first port 321, via the supply tube 58 and the inlet tube 16. The collection target M further flows into the first storage chamber 401 of the first storage body 381 through the first relay tube 361. At this time, since the second port 322 is closed by the switching member 28, the movement of the collection target M from the inlet tube 16 to the second storage portion 202 (i.e., the second relay tube 362) is prevented.

As the collection target M flows into the first storage chamber 401 in a state where the first exhaust portion 541 is disposed above the first storage portion 201, air remaining in the first relay tube 361 and the first storage chamber 401 is pushed out upward within the first storage chamber 401. The air is discharged to the atmosphere through the filter 56 of the first exhaust portion 541.

After the first storage chamber 401 is filled with the collection target M, the collection target M flows into the filter 56 of the first exhaust portion 541. When the collection target M comes into contact with the filter 56, the collection target M is captured and held in the pores of the filter 56. As a result, the outflow of the collection target M is blocked in the first exhaust portion 541 by the filter 56. Therefore, the first exhaust portion 541 is in the closed state, and the collection target M is thus prevented from passing through the filter 56 and being discharged to the outside. A necessary amount (e.g., about 8 mL to about 10 mL) of the collection target M is stored in the first storage chamber 401. The supply of the collection target M from the medical bag 12 to the first storage portion 201 stops.

Next, a step of transferring the collection target M to the second storage portion 202 (i.e., the second storage chamber 402) is performed.

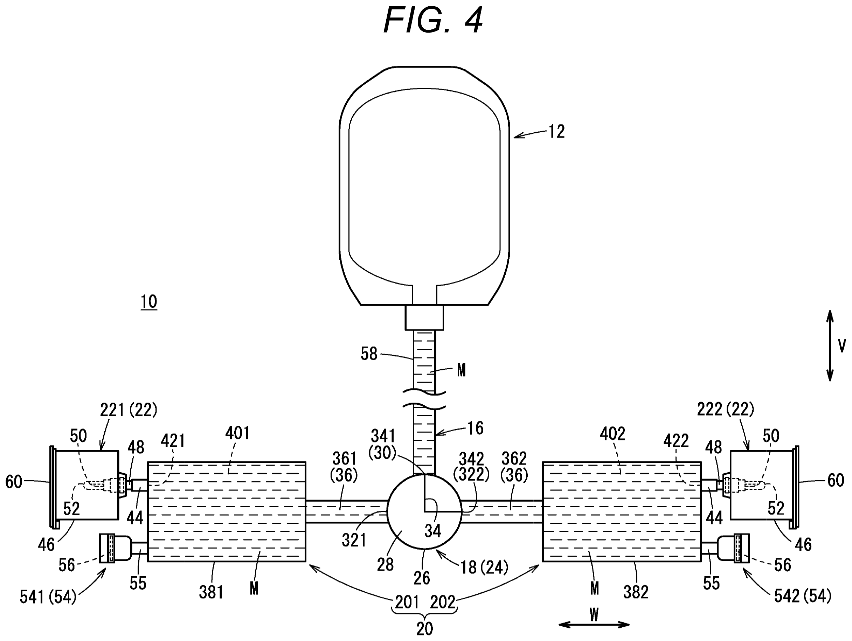

As illustrated in Fig. 4, the worker rotates the stopcock 24 to switch the position of the switching member from the first position to the second position (see Fig. 2B). As illustrated in Fig. 2B, at the second position of the switching member 28, the first opening 341 of the flow path 34 faces the inlet tube 16, and the second opening 342 faces the second port 322 (i.e., the second relay tube 362), so that the inlet tube 16 and the second storage portion 202 communicate with each other. In such a case, the inlet tube 16 and the first storage portion 201 (i.e., the first port 321) are in a non-communicating state. The worker performs the work in a state where the second exhaust portion 542 is disposed above the second storage portion 202.

The collection target M flows out of the medical bag 12 by gravity, and moves from the introduction port 30 to the flow path 34 of the stopcock 24 and the second port 322 via the supply tube 58 and the inlet tube 16. The collection target M further flows into the second storage chamber 402 of the second storage portion 202 from the second port 322 through the second relay tube 362. At this time, since the first port 321 is closed by the switching member 28, the movement of the collection target M from the inlet tube 16 to the first storage portion 201 is prevented. The collection target M stored in the first storage portion 201 is prevented from flowing back toward the second storage portion 202.

As the collection target M flows into the second storage chamber 402 in a state where the second exhaust portion 542 is disposed above the second storage portion 202, air remaining in the second relay tube 362 and the second storage chamber 402 is pushed out upward within the second storage chamber 402. The air is discharged to the atmosphere through the filter 56 of the second exhaust portion 542.

After the second storage chamber 402 is filled with the collection target M, the collection target M flows into the second exhaust portion 542. When the collection target M comes into contact with the filter 56 of the second exhaust portion 542, the collection target M is captured and held in the pores of the filter 56. As a result, the outflow of the collection target M is blocked in the second exhaust portion 542 by the filter 56. Therefore, the second exhaust portion 542 is in the closed state, and the collection target M is thus prevented from passing through the filter 56 and being discharged to the outside. A necessary amount (e.g., about 8 mL to about 10 mL) of the collection target M is stored in the second storage chamber 402. The supply of the collection target M from the medical bag 12 to the second storage portion 202 stops.

Note that the order of the steps of transferring the collection target M to the first storage portion 201 and the second storage portion 202 is not limited to the following: the collection target M is transferred to the first storage portion 201, and then, the collection target M is transferred to the second storage portion 202. The transfer of the collection target M to the second storage portion 202 may be performed before the transfer of the collection target M to the first storage portion 201. In such a case, the position of the switching member 28 of the stopcock 24 is switched to the first position after the second position.

Next, the medical bag 12 is separated from the inlet tube 16. The inlet tube 16 is separated from the supply tube 58 of the medical bag 12, and at the same time, the upstream end 16a of the inlet tube 16 is sealed by welding. For welding the inlet tube 16, for example, a tube sealer, such as a high-frequency sealer or an ultrasonic sealer, is used. The medical bag 12 separated from the collection kit 10 is kept until the test is completed.

Next, a step of transferring the collection target M in the first storage chamber 401 to the first sampling container 141 is performed. At this time, as illustrated in Fig. 5, the operation is performed in a state where the switching member 28 of the stopcock 24 is set at the second position. That is, the communication between the introduction port 30 and the first storage chamber 401 is blocked by the switching member 28. The first sampling container 141 is connected to the first adapter 221. A lid portion 60 of the first adapter 221 is opened, and the neck portion of the first sampling container 141 is inserted into the adapter body 46. As a result, the needle tube 50 provided in the adapter body 46 penetrates the plug body of the first sampling container 141.

The worker folds the plug of the connection member 44 to break the plug in a state where the first sampling container 141 is disposed below the first storage portion 201. As a result, the first outlet port 421 is opened. The collection target M in the first storage chamber 401 is sucked out due to the negative pressure in the first sampling container 141, and passes through the first storage chamber 401, the first outlet port 421, and the communication tube portion 48 and the needle tube 50 of the first adapter 221, and then flows into the first sampling container 141. As a result, substantially the entire amount of the collection target M stored in the first storage chamber 401 is transferred to the first sampling container 141. The amount of the collection target M in the first sampling container 141 is, for example, about 8 mL to about 10 mL. At this time, since the communication between the second storage portion 202 and the first storage portion 201 is blocked by the switching member 28 of the stopcock 24, the collection target M in the second storage chamber 402 is prevented from flowing into the first storage portion 201.

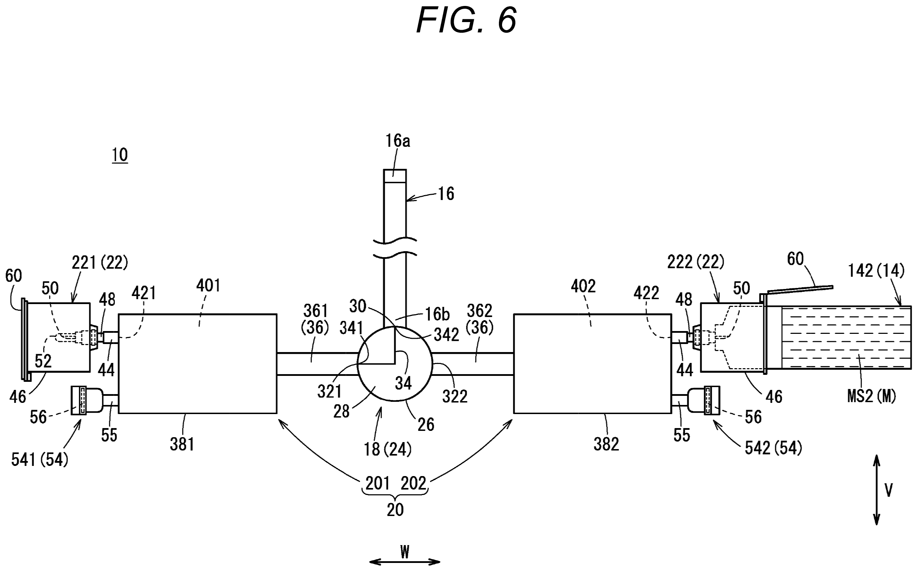

As illustrated in Fig. 6, after the first sampling container 141 is detached from the first adapter 221, a step of connecting the second sampling container 142 to the second adapter 222 to transfer the collection target M in the second storage chamber 402 to the second sampling container 142 is performed. The communication between the inlet tube 16 and the second port 322 is blocked by rotating the switching member 28 after detaching the first sampling container 141. Since the connection of the second sampling container 142 is the same as the connection of the first sampling container 141, the detailed description of the connection between the second adapter 222 and the second sampling container 142 is omitted herein.

The worker folds the plug of the connection member 44 to break the plug, and thus opens the second outlet port 422 in a state where the second sampling container 142 is disposed below the second storage portion 202. The collection target M in the second storage chamber 402 is sucked out due to the negative pressure in the second sampling container 142, and passes through the second storage chamber 402, the second outlet port 422, and the communication tube portion 48 and the needle tube 50 of the second adapter 222, and then flows into the second sampling container 142. As a result, substantially the entire amount of the collection target M stored in the second storage chamber 402 is transferred to the second sampling container 142. The amount of the collection target M in the second sampling container 142 is, for example, about 8 mL to about 10 mL. The second sampling container 142 is detached from the second adapter 222.

As a result, the collection (i.e., sampling) of the collection target M with the collection kit 10 is completed. That is, a first sample MS1 is introduced into the first sampling container 141, and a second sample MS2 is introduced into the second sampling container 142.

Note that the order of the steps of transferring the collection target M to the first sampling container 141 and the second sampling container 142 is not limited to the following: the collection target M is transferred from the first storage chamber 401 to the first sampling container 141, and then, the collection target M is transferred from the second storage chamber 402 to the second sampling container 142. The transfer of the collection target M from the second storage chamber 402 to the second sampling container 142 may be performed before the transfer of the collection target M from the first storage chamber 401 to the first sampling container 141. Alternatively, the collection target M may be collected into the first storage chamber 401 first, and transferred from the first storage chamber 401 to the first sampling container 141, and then, the collection target M may be collected into the second storage chamber 402, and transferred from the second storage chamber 402 to the second sampling container 142. In such a case, the transfer of the collection target M from the second storage chamber 402 to the second sampling container 142 may be performed before the transfer of the collection target M from the first storage chamber 401 to the first sampling container 141.

When the collection target M is a blood product, culture tests are performed on the first sample MS1 and the second sample MS2. Specifically, the first sample MS1 (see Fig. 5) in the first sampling container 141 is used for anaerobic culture, for example, to observe whether or not anaerobic bacteria grow. The second sample MS2 (see Fig. 6) in the second sampling container 142 is used for aerobic culture, for example, to observe whether or not aerobic bacteria grow. In both tests, the first sampling container 141 and the second sampling container 142 are used as culture bottles. If the first sample MS1 and the second sample MS2 have passed the culture tests, the collection target M in the medical bag 12 from which the first sample MS1 and the second sample MS2 have been collected is determined to be an acceptable product. The acceptable product is used for patient treatment (e.g., blood transfusion).

The present embodiment achieves the following advantageous effects.

As illustrated in Fig. 1, the collection kit 10 includes the flow path switching portion 18 disposed between the inlet tube 16 to which the medical bag 12 is connected and the plurality of storage portions 20 (i.e., the first storage portion 201 and the second storage portion 202), and the flow path switching portion 18 allows the inlet tube 16 to selectively communicate with one of the plurality of storage portions 20.

As a result, by providing the flow path switching portion 18 for storing the collection target M in the plurality of storage portions 20, it is possible to increase the work efficiency at the time of collecting the collection target M into the plurality of sampling containers 14 attached to the respective adapters 22, and collect a predetermined amount of the collection target M.

Each of the plurality of storage portions 20 includes the relay tube 36 (i.e., the first relay tube 361 or the second relay tube 362) that receives the collection target M having passed through the inlet tube 16, and the first storage body 381 or the second storage body 382 having the first storage chamber 401 or the second storage chamber 402 that is connected downstream of the relay tube 36, can temporarily store the collection target M, and has a volume larger than the volume of the first relay tube 361 or the second relay tube 362. As a result, it is easy to store a predetermined amount of the collection target M in the first storage chamber 401 and the second storage chamber 402 in the plurality of storage portions 20.

As illustrated in Fig. 2A, the flow path switching portion 18 is the stopcock 24 having the switching member 28 that operates to allow one of the plurality of storage portions 20 to communicate with the inlet tube 16 via the flow path 34 communicating with the inlet tube 16. As a result, the communication between one of the plurality of storage portions 20 and the inlet tube 16 can be effectively switched by operating the switching member 28 of the stopcock 24.

As illustrated in Fig. 1, since the exhaust portion 54 is provided in each of the plurality of storage portions 20, air in each of the first storage chamber 401 and the second storage chamber 402 can be effectively discharged to the atmosphere when the collection target M is stored in each of the first storage chamber 401 and the second storage chamber 402.

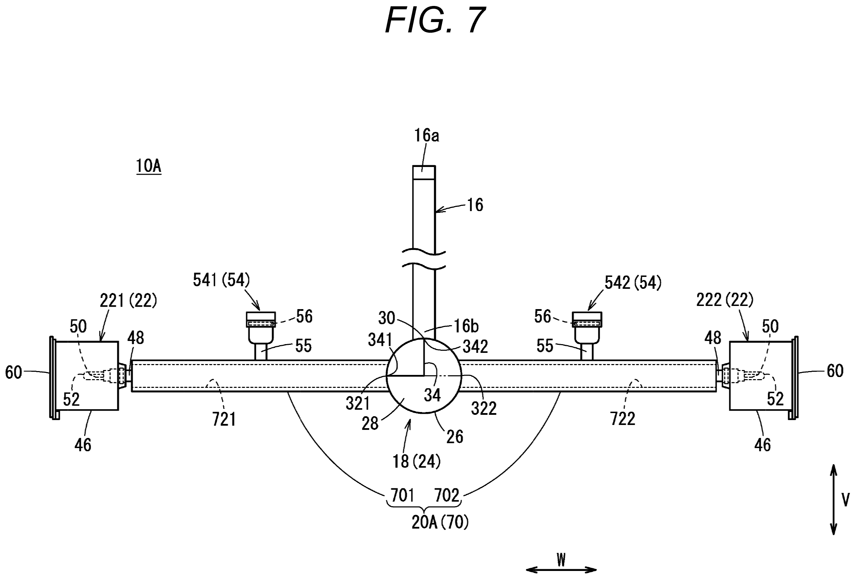

As illustrated in Fig. 7, a collection kit 10A according to a first modification includes a plurality of storage portions 20A. Each of the plurality of storage portions 20A connects the flow path switching portion 18 to one of the plurality of adapters 22. Each of the plurality of storage portions 20A has a storage tube 70 with a lumen capable of temporarily storing the collection target M. A plurality of the storage tubes 70 include a first storage tube 701 and a second storage tube 702. The first adapter 221 is connected to a downstream end of the first storage tube 701, and the second adapter 222 is connected to a downstream end of the second storage tube 702.

The first storage tube 701 has a first storage chamber 721 capable of storing the collection target M therein. The first storage chamber 721 is the lumen of the first storage tube 701. The first exhaust portion 541 is connected to the first storage tube 701 via the attachment member 55, and communicates with the first storage chamber 721. The second storage tube 702 has a second storage chamber 722 capable of storing the collection target M therein. The second storage chamber 722 is the lumen of the second storage tube 702. The second exhaust portion 542 is connected to the second storage tube 702 via the attachment member 55, and communicates with the second storage chamber 722. The first storage tube 701 and the second storage tube 702 have the same length and inner diameter. The volume of the first storage chamber 721 of the first storage tube 701 is, for example, about 8 mL to about 10 mL. The volume of the second storage chamber 722 of the second storage tube 702 is, for example, about 8 mL to about 10 mL. The present invention is not limited to the case where the first storage tube 701 and the second storage tube 702 have the same length and inner diameter. The length and the inner diameter of the first storage tube 701 may be different from the length and the inner diameter of the second storage tube 702.

By setting the switching member 28 of the flow path switching portion 18 at the first position, it is possible to temporarily store the collection target M in the first storage chamber 721 of the first storage tube 701. By setting the switching member 28 of the flow path switching portion 18 at the second position (see a two-dot chain line shape in Fig. 7), it is possible to temporarily store the collection target M in the second storage chamber 722 of the second storage tube 702.

According to the first modification, by forming the plurality of storage portions 20A from the first storage tube 701 and the second storage tube 702, it is possible to directly connect the first adapter 221 and the second adapter 222 to the flow path switching portion 18 only via the first storage tube 701 and the second storage tube 702, respectively. Therefore, the structure of the collection kit 10A can be made simple, and a cost reduction can be achieved.

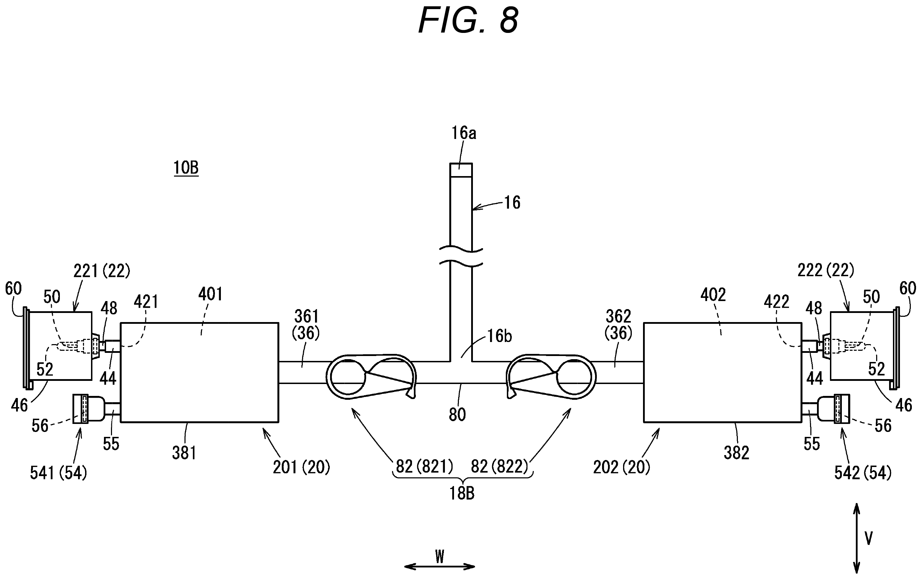

A collection kit 10B according to a second modification illustrated in Fig. 8 includes a flow path switching portion 18B that connects the inlet tube 16 to the plurality of storage portions 20, and allows the inlet tube 16 to selectively communicate with one of the plurality of storage portions 20. The downstream end 16b of the inlet tube 16 is connected to a branch portion 80 between the first relay tube 361 and the second relay tube 362.

The flow path switching portion 18B includes a plurality of closing members 82. Each of the plurality of closing members 82 is, for example, a clamp. The plurality of closing members 82 include a first closing member 821 and a second closing member 822. The first closing member 821 is provided on the first relay tube 361. As the first relay tube 361 is clamped with the first closing member 821, communication between the inlet tube 16 and the first storage portion 201 through the first relay tube 361 is blocked. The second closing member 822 is provided on the second relay tube 362. As the second relay tube 362 is clamped with the second closing member 822, communication between the inlet tube 16 and the second storage portion 202 through the second relay tube 362 is blocked. Note that the first closing member 821 and the second closing member 822 may be respectively detachable from the first relay tube 361 and the second relay tube 362.

When the collection target M is transferred from the medical bag 12 to the first storage portion 201, the blocking of the first relay tube 361 is released by bringing the first closing member 821 into the open state. The second relay tube 362 is blocked by the second closing member 822. The inlet tube 16 and the first storage portion 201 communicate with each other via the first relay tube 361. The collection target M that has flowed out of the medical bag 12 moves to the inlet tube 16, the branch portion 80, and the first relay tube 361 of the first storage portion 201, and is then stored in the first storage chamber 401 of the first storage portion 201. At this time, since the communication between the inlet tube 16 and the second storage portion 202 is blocked by the second closing member 822, the movement of the collection target M to the second storage portion 202 is prevented.

When the collection target M is transferred from the medical bag 12 to the second storage portion 202, the first relay tube 361 is blocked by the first closing member 821, and the blocking of the second relay tube 362 is released by bringing the second closing member 822 into the open state. The inlet tube 16 and the second storage portion 202 communicate with each other. The collection target M that has flowed out of the medical bag 12 moves to the inlet tube 16, the branch portion 80, and the second relay tube 362 of the second storage portion 202, and is then stored in the second storage chamber 402 of the second storage portion 202. At this time, since the communication between the inlet tube 16 and the first storage portion 201 is blocked by the first closing member 821, the movement of the collection target M to the first storage portion 201 is prevented. Note that since the plurality of storage portions 20 and the plurality of closing members 82 are in a correspondence relationship with each other (since one closing member 82 is provided for one storage portion 20), when three or more storage portions 20 are provided, the number of closing members 82 provided is also three or more.

The second modification has the following advantageous effects.

As the flow path switching portion 18B of the collection kit 10B is formed with the plurality of closing members 82, the structure of the flow path switching portion 18B can be made simple, and a cost reduction can be achieved. As compared with the case where the flow path switching portion 18 is formed with the stopcock 24, the structure of the collection kit 10B can be made simple, and a cost reduction can be achieved.

Note that the present invention is not limited to the above-described disclosure, and various configurations can be adopted without departing from the gist of the present invention.

## Claims

1. A collection kit for collecting a collection target contained in a medical bag into a plurality of sampling containers, the collection kit comprising:
an inlet tube connecting to the medical bag;
a plurality of storage portions connected downstream of the inlet tube, the plurality of storage portions being adapted to store the collection target;
a plurality of adapters each connected to one of the plurality of storage portions, and having the sampling containers attached to the respective adapters;
a flow path switching portion disposed between the inlet tube and the plurality of storage portions, the flow path switching portion being adapted to allow the inlet tube to selectively communicate with one of the plurality of storage portions; and
an exhaust portion for exhausting air in the plurality of storage portions.

2. The collection kit according to claim 1, wherein
each of the plurality of storage portions includes:
a relay tube that receives the collection target having passed through the inlet tube, and
a storage body having a storage chamber that is connected downstream of the relay tube, is capable of temporarily storing the collection target, and has a volume larger than a volume of the relay tube.

3. The collection kit according to claim 1 or 2, wherein
the flow path switching portion is a stopcock including a flow path communicating with the inlet tube, and a switching member operable to allow one of the plurality of storage portions to communicate with the inlet tube via the flow path.

4. The collection kit according to claim 2, wherein
the flow path switching portion includes a plurality of closing members each provided on one of a plurality of the relay tubes to block communication between one of the plurality of storage portions and the inlet tube.

5. The collection kit according to claim 1, wherein
the exhaust portion is provided in each of the plurality of storage portions.
